(19) **Europäisches Patentamt / European Patent Office / Office européen des brevets**

(11) **EP 1 652 336 B1**

(12) **FASCICULE DE BREVET EUROPEEN**

(45) Date de publication et mention
de la délivrance du brevet:
**23.05.2007 Bulletin 2007/21**

(21) Numéro de dépôt: **04741978.3**

(22) Date de dépôt: **08.07.2004**

(51) Int Cl.:
*H04L 9/30* (2006.01)

(86) Numéro de dépôt international:
**PCT/EP2004/051411**

(87) Numéro de publication internationale:
**WO 2005/022820 (10.03.2005 Gazette 2005/10)**

(54) **PROCEDE POUR LA MISE EN OEUVRE SECURISEE D'UN ALGORITHME DE CRYPTOGRAPHIE DE TYPE RSA ET COMPOSANT CORRESPONDANT**

**VERFAHREN ZUR GESICHERTEN AUSFÜHRUNG EINES RSA KRYPTOGRAPHISCHEN ALGORITHMUS, SOWIE DIESBEZÜGLICHER BAUSTEIN.**

**METHOD FOR THE SECURE APPLICATION OF A CRYPTOGRAPHIC ALGORITHM OF THE RSA TYPE AND CORRESPONDING COMPONENT**

(84) Etats contractants désignés:
**AT BE BG CH CY CZ DE DK EE ES FI FR GB GR HU IE IT LI LU MC NL PL PT RO SE SI SK TR**

(30) Priorité: **31.07.2003 FR 0309457**

(43) Date de publication de la demande:
**03.05.2006 Bulletin 2006/18**

(73) Titulaire: **GEMPLUS**
**13420 Gémenos (FR)**

(72) Inventeurs:
• **VILLEGAS, Karine**
 **F-13420 GEMENOS (FR)**
• **JOYE, Marc**
 **F-83640 SAINT ZACHARIE (FR)**
• **CHEVALLIER-MAMES, Benoit**
 **F-13260 CASSIS (FR)**

(56) Documents cités:
**FR-A- 2 830 146**

• **AUMUELLER C ET AL: "FAULT ATTACKS ON RSA WITH CRT: CONCRETE RESULTS AND PRACTICAL COUNTERMEASURES" CRYPTOGRAPHIC HARDWARE AND EMBEDDED SYSTEMS. INTERNATIONAL WORKSHOP, XX, XX, 13 août 2002 (2002-08-13), pages 260-275, XP001160527**

**Description**

La présente invention se rapporte à un procédé pour la mise en oeuvre sécurisée d'un algorithme de cryptographie dans un composant électronique et, plus particulièrement, pour la mise en oeuvre sécurisée d'un algorithme de cryptographie de type RSA.

L'invention concerne également le composant électronique correspondant.

De tels composants sont notamment utilisés dans des applications où l'accès à des services ou à des données est sévèrement contrôlé.

Ils ont une architecture dite logicielle, c'est-à-dire programmable formée autour d'un microprocesseur et de mémoires, dont une mémoire programme non volatile de type *EEPROM* qui contient un ou plusieurs nombres secrets. Il s'agit d'une architecture généraliste apte à exécuter n'importe quel algorithme.

Ces composants sont utilisés dans des systèmes informatiques, embarqués ou non. Ils sont notamment utilisés dans les cartes à puce, pour certaines applications de celles-ci. Ce sont par exemple des applications d'accès à certaines banques de données, des applications bancaires, des applications de télépéage, par exemple pour la télévision, la distribution d'essence ou encore le passage de péages d'autoroutes.

Ces composants ou ces cartes mettent donc en oeuvre un algorithme de cryptographie pour assurer le chiffrement de données émises et/ou le déchiffrement de données reçues, l'authentification ou la signature numérique d'un message.

A partir de ce message appliqué en entrée à la carte par un système hôte (serveur, distributeur bancaire...) et de nombres secrets contenus dans la carte, la carte fournit en retour au système hôte ce message chiffré, authentifié ou signé, ce qui permet par exemple au système hôte d'authentifier le composant ou la carte, d'échanger des données...

Les caractéristiques des algorithmes de cryptographie peuvent être connues : calculs effectués, paramètres utilisés. La seule inconnue est le ou les nombres secrets. Toute la sécurité de ces algorithmes de cryptographie tient dans ce (s) nombre (s) secret (s) contenu(s) dans la carte et inconnu(s) du monde extérieur à la carte. Ce nombre secret ne peut être déduit de la seule connaissance du message appliqué en entrée et du message chiffré fourni en retour.

Or, il est apparu que des attaques externes basées sur des grandeurs physiques mesurables à l'extérieur du composant lorsque celui-ci est en train de dérouler l'algorithme de cryptographie, permettent à des tiers mal intentionnés de trouver le(s) nombre(s) secret(s) contenu(s) dans cette carte. Ces attaques sont appelées attaques à canaux cachés (« Side channel attacks » en anglais) ; on distingue parmi ces attaques à canaux cachés, les attaques SPA, acronyme anglo-saxon pour *Single Power Analysis* basées sur une voire quelques mesures et les attaques DPA, acronyme anglo-saxon pour *Differential Power Analysis* basées sur des analyses statistiques issues de nombreuses mesures. Le principe de ces attaques à canaux cachés repose par exemple sur le fait que la consommation en courant du microprocesseur exécutant des instructions varie selon l'instruction ou la donnée manipulée.

Il existe également un type d'attaque, dite « attaque par faute ». Dans ce type d'attaque, l'attaquant injecte une faute quelconque pendant le calcul d'un algorithme cryptographique, dans le but d'exploiter la présence de cette faute pour extraire une information secrète.

La faute peut aussi provenir d'une erreur de calcul due au matériel mettant en oeuvre l'algorithme cryptographique. On considère néanmoins, dans un cas comme dans l'autre, qu'il s'agit d'une attaque par faute.

Ces différents types d'attaque sont notamment envisageables avec les algorithmes de cryptographie à clé publique comme par exemple l'algorithme RSA (du nom de ses auteurs Rivest, Shamir, Adleman), qui est celui le plus utilisé en cryptographie dans ce domaine d'application, et auquel la présente invention s'applique plus particulièrement.

On rappelle ci-après brièvement les principales caractéristiques du *système cryptographique* à clé publique RSA.

La première réalisation de schéma de chiffrement *et de signature* à clé publique fut mise au point en 1977 par Rivest, Shamir et Adleman, qui ont inventé le système *cryptographique* RSA. La sécurité de RSA repose sur la difficulté de factoriser un grand nombre qui est le produit de deux nombres premiers. Ce système est le système *cryptographique* à clé publique le plus utilisé. Il peut être utilisé comme procédé de chiffrement ou comme procédé de signature.

Le principe du système *cryptographique* RSA est le suivant. Il consiste d'abord à générer la paire de clés RSA.

Ainsi, chaque utilisateur crée une clé publique RSA et une clé privée correspondante, suivant le procédé suivant en 5 étapes:

  1) Générer deux nombres premiers distincts p et q;
  2) Calculer n=pq et $\Phi(n)=(p-1)(q-1)$, $\Phi$ étant appelée la fonction indicatrice d'Euler;
  *3) Sélectionner un entier e, 1<e<$\Phi$ (n), tel que pgcd(e,$\Phi$(n))=1, aléatoirement ou au choix de l'utilisateur qui pourrait donc choisir e petit tel que e = $2^{16}+1$ ou e = 3 ou e = 17 ;*
  4) Calculer l'unique entier d, 1<d<$\Phi(n)$, tel que :

$$e.d = 1 \text{ modulo } \Phi(n) \; ; \qquad (1)$$

5) La clé publique est (n,e); la clé privée est d ou (d,p,q).

Les entiers e et d sont appelés respectivement *exposant public et exposant privé.* L'entier n est appelé le module RSA.

Une fois les paramètres publics et privés définis, étant donné x, avec 0<x<n, l'opération publique sur x qui peut être par exemple le chiffrement du message x consiste à calculer:

$$y = x^e \text{ modulo } n \qquad (2)$$

Dans ce cas, l'opération privée correspondante est l'opération de déchiffrement du message chiffré y, et consiste à calculer :

$$y^d \text{ modulo } n \qquad (3)$$

L'opération publique sur x peut encore être la vérification de la signature x, et consiste à calculer :

$$y = x^e \text{ modulo } n \qquad (2)$$

L'opération privée correspondante est alors la génération d'une signature x à partir du message préalablement encodé y par application d'une fonction de hachage $\mu$ ("padding" selon la terminologie anglo-saxonne), et consiste à calculer :

$$y^d \text{ modulo } n \qquad (3)$$

Avec x= $y^d$ modulo n puisque e.d = 1 modulo $\Phi(n)$

On va présenter un autre mode de fonctionnement dit mode CRT car basé sur le théorème des restes chinois (« Chinese Remainder Therorem » ou CRT en anglais) et quatre fois plus rapide que celui de l'algorithme RSA standard. Selon ce mode CRT, on n'effectue pas directement les calculs modulo n mais on effectue d'abord les calculs modulo p et modulo q.

Les paramètres publics sont (n, e) mais les paramètres privés sont dans ce mode (p, q, d) ou (p, q, $d_p$, $d_q$, $i_q$) avec

$$d_p = d \text{ modulo}(p-1), \; d_q = d \text{ modulo}(q-1)$$

et

$$i_q = q^{-1} \text{ modulo } p$$

Par la relation (1), on obtient, :

$$ed_p = 1 \text{ modulo}(p-1) \text{ et } ed_q = 1 \text{ modulo}(q-1) \quad (4)$$

L'opération publique s'effectue de la même façon que pour le mode de fonctionnement standard. Par contre, pour l'opération privée, on calcule d'abord :

$$x_p = y^{dp} \text{ modulo } p \text{ et } x_q = y^{dq} \text{ modulo } q$$

Ensuite, par application du théorème des restes chinois, on obtient $x = y^d$ modulo n par:

$$x = \text{CRT}(x_p, x_q) = x_q + q[i_q(x_p - x_q) \text{ modulo } p] \quad (5)$$

Une orientation importante dans le domaine de la cryptographie à clé publique utilisant le schéma de chiffrement RSA consiste donc à sécuriser la mise en oeuvre des algorithmes RSA contre les différents types d'attaques possibles évoqués plus haut, notamment les attaques à canaux cachés telles que les attaques DPA et SPA, ainsi que les attaques dites par faute où l'attaquant, par une méthode quelconque, injecte une faute pendant le calcul d'une opération privée de l'algorithme RSA, dans le but d'obtenir une valeur corrompue à partir de laquelle il est possible, dans certains cas, de déduire certaines données secrètes.

Dans l'état de la technique, certains procédés de contre-mesure ont été envisagés pour parer ces différents types d'attaques.

Notamment, une contre-mesure possible pour parer les attaques de type DPA *(et SPA)* contre le RSA en mode standard consiste à *rendre aléatoire* le calcul de l'opération privée du RSA (signature ou déchiffrement) en introduisant dans le calcul une valeur aléatoire.

Ainsi, une méthode de contre-mesure de ce type consiste à calculer l'opération privée en mode standard (3) $x = y^d$ modulo n de la façon suivante :

$x = y^{d-r} \cdot y^r$ modulo n, avec r étant un nombre entier aléatoire. Toutefois, l'inconvénient de cette méthode de contre-mesure est que le temps de calcul est doublé.

Une autre méthode de contre-mesure de ce type pour parer les attaques DPA *(et SPA)* contre le RSA en mode standard consiste à calculer l'opération privée (3) $x = y^d$ modulo n de la façon suivante:

$x = y^{(d+r.\Phi(n))}$ modulo n, avec r un entier aléatoire. Cependant, un inconvénient de cette méthode est qu'elle requiert la connaissance de la valeur de $\Phi(n)$, qui est généralement inconnue par l'algorithme de cryptographie qui met en oeuvre l'opération privée (signature ou déchiffrement).

Aussi, une variante de cette méthode est proposée, basée non plus sur la connaissance de la valeur de $\Phi(n)$ mais sur celle de la valeur de *l'exposant public* e. En effet, on a d'après (1) : $e.d = 1$ modulo $\Phi(n)$, aussi, il existe un entier k tel que : $e.d-1 = k. \Phi(n)$;

En conséquence, l'expression $x\, y^{(d+r.\Phi(n))}$ modulo n peut se calculer sous la forme :

$x = y^{(d+r.(ed-1))}$ modulo n, avec r un entier aléatoire.

Cette méthode de contre-mesure est donc calculatoirement équivalente à celle dont elle découle, avec l'avantage cependant de ne pas nécessiter la connaissance de la valeur de $\Phi(n)$. Elle requiert moins de mémoire en ce sens qu'elle ne nécessite pas de garder $\Phi(n)$.

Toutefois, cette variante de contre-mesure, pour pouvoir être mise en oeuvre, nécessite d'avoir la connaissance de la valeur de l'exposant public e. Or, dans de nombreuses applications de cryptographie, le composant ou le dispositif mettant en oeuvre l'opération privée de l'algorithme RSA ne dispose pas toujours de *l'exposant public* e, notamment lorsqu'il n'exécute que l'opération privée. *L'exposant public* e est donc dans ce contexte généralement inconnu ou indisponible.

*Les contre-mesures décrites précédemment sont principalement destinées à parer les attaques de type DPA. Cependant, elles rendent également plus difficiles les attaques de type SPA dans la mesure où l'exécution de l'algorithme est non-déterministe.*

Pour ce qui est de l'autre type d'attaque qui a été évoqué, dite attaque par faute, la meilleure protection possible pour la parer consiste à tester, en mode standard, que la valeur x obtenue par application de l'opération privée vérifie effectivement la relation $x^e = y$ modulo n de l'opération publique. Si ce n'est pas le cas, on ne retournera pas la valeur y pour éviter son utilisation à des fins de cryptanalyse.

En mode CRT, la protection consiste à vérifier d'une part, si effectivement les relations $x^e = y$ modulo p et, d'autre part, $x^e = y$ modulo q sont vérifiées.

En effet, lorsque ces relations sont vérifiées, on est assuré qu'il n'y a pas eu d'erreurs pendant le déroulement de l'opération privée de l'algorithme RSA.

Toutefois, un inconvénient empêchant la mise en oeuvre de telles vérifications contre les attaques par faute, en mode standard ou en mode CRT, est que ces opérations de vérification nécessitent également la connaissance préalable de *l'exposant public* e. Or, comme déjà vu, le composant ou le dispositif mettant en oeuvre l'opération privée de l'algorithme RSA, en mode standard ou CRT, ne dispose pas toujours de *l'exposant public* e, notamment lorsqu'il n'exécute que l'opération privée. *L'exposant public* e est donc dans ce contexte généralement inconnu ou indisponible.

Le document de brevet FR 2 830 146 (D1) propose à cet effet un procédé permettant de réaliser certaines étapes d'un algorithme de cryptographie, et notamment de type RSA en mode standard ou CRT, utilisant un *exposant public* e que l'on ne connaît pas a priori.

Le procédé objet de D1 permet en particulier de réaliser une contre-mesure, notamment aux attaques par faute, qui offre la meilleure protection possible telle qu'évoquée ci-dessus, même lorsqu'on ne connaît pas *l'exposant public* e.

Pour ce faire, soit (e, d) une paire correspondante d'exposants RSA respectivement *public et privé* et soit n le module RSA. D1 part de la constatation suivante selon laquelle dans 95% des cas, la valeur de *l'exposant public* e est choisie parmi les valeurs $2^{16}+1$, 3, 17. La méthode de D1, exposée brièvement ici en référence au mode standard mais qui peut tout autant s'appliquer au mode CRT, consiste alors à vérifier que e est bien égal à une de ces valeurs en testant successivement si $e_i.d = 1$ modulo $\Phi(n)$, avec $e_i \Phi E = \{2^{16}+1, 3, 17\}$, jusqu'à ce que la relation soit vérifiée.

Lorsque la relation est vérifiée pour un $e_i$, alors on sait que $e=e_i$. Une fois la valeur de *l'exposant public* e déterminée de cette façon, e est mémorisée en vue de son utilisation dans des calculs de l'algorithme RSA visant à vérifier qu'il n'y a pas eu d'erreurs, dues à une attaque par faute, pendant le déroulement d'une opération privée correspondante de l'algorithme RSA. Ainsi, connaissant e, il est possible d'affirmer avec une probabilité égale à 1 que l'opération privée se rapportant par exemple à la génération d'une signature s, avec $s = \mu(m)^d$ modulo n, $\mu(m)$ étant la valeur obtenue par l'application d'une fonction $\mu$ de padding au message m à signer, a été effectuée sans erreur en vérifiant simplement que la valeur s obtenue vérifie la relation $s^e = \mu(m)$ modulo n de l'opération publique correspondante.

Si aucune valeur de $e_i$ n'a pu être attribuée à e, il convient alors de constater selon D1 que les calculs de l'algorithme RSA utilisant la valeur e pour la sécurisation contre les attaques par faute ne peuvent être effectués.

Cependant, un inconvénient de la méthode proposée par D1 est qu'elle implique d'exécuter une pluralité de calculs modulaires lorsqu'on teste successivement si la relation $e_i d = 1$ modulo $\Phi(n)$ est vérifiée, pour une valeur de $e_i$ parmi les $e_i$ envisagés. Or les calculs modulaires sont des calculs complexes. Cette méthode se révèle donc pénalisante en terme de temps de calcul et de ressources de calcul.

Aussi, le problème qui se pose est de pallier les inconvénients précités.

Plus particulièrement, un but de la présente invention consiste à déterminer d'une façon qui ne soit pas pénalisante en terme de rapidité et de complexité de calcul, la valeur d'un *exposant public* e parmi un ensemble de valeurs probables prédéterminées, lorsque l'on ne connaît pas cette valeur de e a priori, l'exposant e étant mis en oeuvre dans certaines étapes d'un algorithme de cryptographie de type RSA en mode standard ou CRT.

Un autre but consiste donc à pouvoir mettre en oeuvre, une fois la valeur *de l'exposant public* e déterminée, des opérations de contre-mesure utilisant la valeur de *l'exposant public* e, visant à parer d'une part, les attaques dites attaques par faute et, d'autre part, les attaques dites à canaux cachés, notamment de type DPA et SPA, susceptibles d'être conduites lors de la mise en oeuvre d'une opération privée d'un algorithme de cryptographie, notamment de type RSA.

Avec ces objectifs en vue, l'invention concerne un procédé pour la mise en oeuvre sécurisée d'un algorithme de cryptographie à clé publique, *ladite clé publique étant composée d'un nombre entier n, produit de deux grands nombres premiers p et q,* et d'un exposant *public* e, algorithme comprenant également une clé privée ledit procédé consistant à déterminer un ensemble E comprenant un nombre prédéterminé de valeurs $e_i$ susceptibles de correspondre à la valeur de l'exposant *public* e, les $e_i$ étant des nombres *premiers,* caractérisé en ce qu'il comprend les étapes suivantes consistant à:

a) définir une valeur $\displaystyle \in = \prod_{ei \in E} e_i$

*telle que $\in / e_i$ soit inférieur à $\Phi(n)$ pour tout $e_i$ appartenant à E, $\Phi$ étant la fonction indicatrice d'Euler;*

b) appliquer la valeur $\in$ dans un calcul prédéterminé;

c) pour chacun des $e_i$ de E, tester si le résultat dudit calcul prédéterminé est égal à une valeur $\in / e_i$:

- si c'est le cas, alors attribuer la valeur $e_i$ à e et mémoriser e en vue de son utilisation dans des calculs dudit algorithme de cryptographie;
- sinon, constater que les calculs dudit algorithme de cryptographie utilisant la valeur e ne peuvent être effectués.

L'avantage est donc clairement que l'on n'ait plus qu'une seule multiplication modulaire.

Dans une première variante, l'algorithme de cryptographie est basé sur un algorithme de type RSA en mode standard.

En rapport avec cette première variante, le calcul prédéterminé de l'étape b) consiste à calculer une valeur C :

C = C.d modulo $\Phi(n)$, d étant la clé privée correspondante de l'algorithme RSA telle que e.d = 1 modulo $\Phi(n)$ et $\Phi$ étant la fonction indicatrice d'Euler.

Selon une alternative, le calcul prédéterminé de l'étape b) consiste à calculer une valeur C :

C = $\in$.d modulo $\lambda(n)$, d étant la clé privée correspondante de l'algorithme RSA telle que e.d = 1 modulo $\lambda(n)$ et $\lambda$ étant la fonction de Carmichael.

Dans une seconde variante, l'algorithme de cryptographie est basé sur un algorithme de type RSA en mode CRT.

En liaison avec cette seconde variante, le calcul prédéterminé de l'étape b) consiste à calculer une valeur C :

C = $\in$.$d_p$ modulo (p-1), $d_p$ étant la clé privée correspondante de l'algorithme RSA telle que e.$d_p$ = 1 modulo (p-1).

Selon une alternative, le calcul prédéterminé de l'étape b) consiste à calculer une valeur C :

C = $\in$.$d_q$ modulo (q-1), dq étant la clé privée correspondante de l'algorithme RSA telle que e.$d_q$ = 1 modulo (q-1).

Selon une autre alternative, le calcul prédéterminé de l'étape b) consiste à calculer deux valeurs $C_1$ et $C_2$ telles que :

$C_1$ = $\in$.$d_p$ modulo (p-1), $d_p$ étant la clé privée correspondante de l'algorithme RSA telle que e.$d_p$ = 1 modulo (p-1),
$C_2$ = $\in$.$d_q$ modulo (q-1), $d_q$ étant la clé privée correspondante de l'algorithme RSA telle que e.$d_q$ = 1 modulo (q-1),
et en ce que l'étape de test c) consiste pour chaque $e_i$, à tester si $C_1$ et/ou $C_2$ est égal à la valeur $\in$/$e_i$:

- si c'est le cas, alors attribuer la valeur $e_i$ à e et mémoriser e en vue de son utilisation dans des calculs dudit algorithme de cryptographie;
- sinon, constater que les calculs dudit algorithme de cryptographie utilisant la valeur e ne peuvent être effectués.

Selon la première variante et dans le cas où une valeur $e_i$ a été attribuée à e, les calculs utilisant la valeur e consistent à :

- choisir un entier aléatoire r;
- calculer une valeur d* telle que d* = d+r.(e.d-1);
- mettre en oeuvre une opération privée de l'algorithme dans laquelle une valeur x est obtenue à partir d'une valeur y en appliquant la relation x = $y^{d*}$ modulo n.

Selon la première variante et dans le cas où une valeur $e_i$ a été attribuée à e, les calculs utilisant la valeur e consistent à obtenir, à l'issue d'une opération privée de l'algorithme, une valeur x à partir d'une valeur y et à vérifier si $x^e$ = y modulo n.

Selon la deuxième variante et dans le cas où une valeur $e_i$ a été attribuée à e, les calculs utilisant la valeur e consistent à obtenir, à l'issue d'une opération privée de l'algorithme, une valeur x à partir d'une valeur y et à vérifier d'une part, si $x^e$ = y modulo p et, d'autre part, si $x^e$ = y modulo q.

De préférence, l'ensemble E comprend au moins les valeurs $e_i$ suivantes 3, 17, $2^{16}$+1.

L'invention concerne également un composant électronique caractérisé en ce qu'il comprend des moyens pour la mise en oeuvre du procédé tel que défini précédemment.

L'invention concerne encore une carte à puce comprenant un composant électronique tel que défini.

L'objet de l'invention concerne également un procédé pour la mise en oeuvre sécurisée d'un algorithme de cryptographie à clé publique, ladite clé publique *étant composée d'un nombre entier n, produit de deux grands nombres premiers p et q,* et d'un exposant *public* e, ledit procédé consistant à déterminer un ensemble E comprenant un nombre prédéterminé de valeurs $e_i$ susceptibles de correspondre à la valeur de l'exposant *public* e, les $e_i$ étant des nombres *premiers,* caractérisé en ce qu'il consiste à réaliser les étapes suivantes consistant à:

a) choisir une valeur $e_i$ parmi les valeurs de l'ensemble E;

b) *si* $\Phi(p)=\Phi(q)$*,* tester si la valeur $e_i$ choisie vérifie la relation : $(1-e_i.d)$ modulo $n < e_i.2^{(\Phi(n)/2)+1}$
ou ladite relation simplifiée :

$$(-e_i.d) \ modulo \ n \ < \ e_i.2^{(\Phi(n)/2)+1}$$

avec $\Phi(p)$, $\Phi(q)$ et $\Phi(n)$ les fonctions donnant le nombre de bits *codant respectivement le nombre p, le nombre q*
et le nombre n;
sinon, dans le cas où p et q sont déséquilibrés, tester si la valeur $e_i$ choisie vérifie la relation:

$$(1-e_i.d) \ modulo \ n \ < \ e_i.2^{g+1}$$

ou ladite relation simplifiée :

$$(-e_i.d) \ modulo \ n \ < \ e_i.2^{g+1}$$

avec *g=max(*$\Phi(p)$*,* $\Phi(q)$*) si* $\Phi(p)$ *et* $\Phi(q)$ *sont connus ou, dans le cas contraire, avec g=* $\Phi(n)$*/2+t, où t désigne le facteur de déséquilibre ou une borne sur ce facteur;*
c) si la relation de test appliquée à l'étape précédente est vérifiée, alors $e = e_i$, et mémoriser e en vue de son utilisation dans des calculs dudit algorithme de cryptographie,

- si ce n'est pas le cas, réitérer les étapes précédentes en choisissant une autre valeur de $e_i$ dans l'ensemble E jusqu'à ce qu'une valeur de $e_i$ puisse être attribuée à e et si aucune valeur de $e_i$ ne peut être attribuée à e alors constater que les calculs dudit algorithme de cryptographie utilisant la valeur de e ne peuvent pas être effectués.

Le fait de choisir l'ordre des $e_i$ comme celui des probabilités d'apparitions des exposants publics permet de gagner du temps. Ainsi, on pourra choisir préférentiellement l'ordre suivant : $e_0=2^{16}+1$, $e_1=3$, $e_2=17$.
Dans une variante, on a pour tous les i, $e_i \leq 2^{16}+1$ et l'étape b) est remplacée par une autre étape de test consistant à :

si $\Phi(p)=\Phi(q)$*,* tester si la valeur $e_i$ choisie vérifie la relation: $(1-e_i.d)$ modulo $n < 2^{(\Phi(n)/2)+17}$
ou ladite relation simplifiée :

$$(-e_i.d) \ modulo \ n \ < \ 2^{(\Phi(n)/2)+17}$$

avec $\Phi(p)$, $\Phi(q)$, $\Phi(n)$ les fonctions donnant le nombre de bits codant respectivement le nombre p, le nombre q et le nombre n;
sinon, dans le cas où p et q sont déséquilibrés, tester si la valeur $e_i$ choisie vérifie la relation :$(1-e_i.d)$ modulo $n < 2^{g+17}$
ou ladite relation simplifiée:

$$(-e_i.d) \ modulo \ n \ < \ 2^{g+17}$$

avec *g=max (*$\Phi(p)$*,* $\Phi(q)$*), si* $\Phi(p)$ *et* $\Phi(q)$ *sont connus ou, dans le cas contraire, avec g=* $\Phi(n)$*/2+t, où t désigne le facteur de déséquilibre ou une borne sur ce facteur.*

Dans une autre variante, l'étape b) est remplacée par une autre étape de test consistant à :

tester si la valeur $e_i$ choisie vérifie la relation selon laquelle:

les *premiers* bits de poids forts de $(1-e_i.d)$ modulo n sont nuls ;

**EP 1 652 336 B1**

ou ladite relation simplifiée selon laquelle :

les *premiers* bits de poids forts de (-e$_i$.d) modulo n sont nuls.

*De préférence, le test est effectué sur les 128 premiers bits de poids fort.*
Selon un mode de réalisation préféré de l'invention, l'algorithme de cryptographie est basé sur un algorithme de type RSA en mode standard.
Selon une caractéristique, une valeur e$_i$ ayant été attribuée à e, les calculs utilisant la valeur e consistent à :

- choisir un entier aléatoire r;
- calculer une valeur d* telle que d* = d+r.(e.d-1);
- mettre en oeuvre une opération privée de l'algorithme dans laquelle une valeur x est obtenue à partir d'une valeur y en appliquant la relation x = y$^{d*}$ modulo n.

Selon une autre caractéristique, une valeur e$_i$ ayant été attribuée à e, le procédé de l'invention consiste à obtenir, à l'issue d'une opération privée de l'algorithme, une valeur x à partir d'une valeur y et les calculs utilisant la valeur e consistent à vérifier si x$^e$ = y modulo n.
De préférence, l'ensemble E comprend au moins les valeurs e$_i$ suivantes 3, 17, 2$^{16}$+1.
L'invention concerne encore un composant électronique caractérisé en ce qu'il comprend des moyens pour la mise en oeuvre du procédé tel qu'il vient d'être défini.
L'invention concerne également une carte à puce comprenant un composant électronique tel que défini.
D'autres caractéristiques et avantages de la présente invention ressortiront plus clairement de la description qui est faite ci-après, à titre indicatif et nullement limitatif.
La présente invention décrit donc différentes techniques permettant de valider la valeur d'un exposant *public* e que l'on ne connaît pas a priori. Ces techniques peuvent être mises en oeuvre par tout dispositif ou composant électronique doté de moyens de calculs cryptographiques adéquats, en particulier une carte à puce.
L'objet de l'invention est basé sur la constatation suivante : soit un ensemble E comprenant au moins les valeurs de e suivantes : e$_0$ = 2$^{16}$+1; e$_1$ = 3 et e$_2$ = 17; cet ensemble E de valeurs couvre environ 95% des valeurs des exposants *publics* couramment utilisés dans les calculs des algorithmes de cryptographie de type RSA.
La première technique proposée par la présente invention, valable pour le mode standard de l'algorithme RSA, consiste alors d'une façon générale à choisir e$_0$ et à vérifier que e=e$_0$; si e≠e$_0$ alors on essaie avec e$_1$; et si e≠e$_1$, alors on essaie avec e$_2$.
Il se peut que pour une certaine application correspondant aux 5% d'autres cas, e ne soit pas égal ni à e$_0$, ni à e$_1$, ni à e$_2$. Aussi, désigne-t-on plus généralement la valeur de e par e$_i$. Et la méthode consiste finalement à choisir une valeur e$_i$ parmi les e$_i$ envisagés et à vérifier que e = e$_i$.
Plus particulièrement, la première technique pour retrouver la valeur de e, valable pour le mode standard de l'algorithme RSA, est basée sur le raisonnement suivant :
Dans le mode standard, l'algorithme privé (mettant en oeuvre une opération de signature ou de déchiffrement d'un message) dispose de la valeur du module n et de l'exposant privé d.
Ainsi, de l'expression (1), il découle qu'il existe un entier k tel que:

$$e.d = 1 + k \; \Phi(n),$$

soit : 1-e.d = -k Φ(n) = -k.(n-p-q+1)
En réduisant les deux côtés de l'expression modulo n, on obtient :

$$1-e.d = k(p+q-1) \; (modulo \; n).$$

En notant que l'on a toujours k<e *lorsque e est relativement petit,* l'expression précédente peut aussi s'écrire:

$$(1-e.d) \; modulo \; n = k(p+q-1). \; (6)$$

Le côté gauche de l'équation 6 a sensiblement la taille du module n, tandis que le côté droit a sa taille définie

8

selon l'expression suivante quand p et q sont équilibrés, c'est-à-dire de même taille $\Phi(p) = \Phi(q)$ :

$$k.(p+q-1) < e.2^{(\Phi(n)/2)+1}$$

avec $\Phi(n)$, $\Phi(p)$, $\Phi(q)$ les fonctions donnant le nombre de bits codant respectivement le nombre n, le nombre p et le nombre q.

Quand p et q ne sont pas de même taille, on appelle la fonction g=max ($\Phi(p)$, $\Phi(q)$), c'est-à-dire la fonction donnant le maximum des longueurs de p et q *dans le cas où $\Phi(p)$ et $\Phi(q)$ sont connus; sinon, on prend g=$\Phi(n)/2+t$, où t désigne le facteur de déséquilibre ou une borne sur ce facteur dans le cas contraire.* Dans ce cas où p et q sont déséquilibrés, la formule de l'expression ci-dessus devient :

$$k.(p+q-1) < e.2^{1+g}$$

En effet, comme n = p.q, si p et q sont équilibrés, alors on a l'expression $p+q < 2^{(\Phi(n)/2)+1}$; à l'inverse, si p et q sont déséquilibrés, alors : $p+q < 2^{1+g}$

Ainsi, pour tous les $e_i$ possibles dans l'ensemble E, si $\Phi(p) = \Phi(q)$, on teste si la valeur $e_i$ choisie vérifie la relation prédéterminée suivante :

$$(1-e_i.d) \; modulo \; n \; < \; e_i.2^{(\Phi(n)/2)+1} \qquad (7)$$

sinon, on teste si la valeur $e_i$ choisie vérifie la relation prédéterminée suivante :

$$(1-e_i.d) \; modulo \; n \; < \; e_i.2^{g+1} \qquad (7')$$

si la relation prédéterminée de test appliquée est vérifiée, alors $e=e_i$ et on mémorise e,
sinon, on choisit une autre valeur de $e_i$ dans l'ensemble E et on réitère les étapes précédentes.
Dans une première variante, le test pour retrouver la valeur de e:

$$(1-e_i.d) modulo \; n \; < \; e_i.2^{(\Phi(n)/2)+1}$$

ou
$(1-e_i.d) modulo \; n < e_i.2^{g+1}$, suivant que p et q soient équilibrés ou non, peut être remplacé par le test suivant:

$$(1-e_i.d) \; modulo \; n \; < \; B,$$

avec B $\geq$ [max($e_i$)] $2^{(\Phi(n)/2)+1}$ dans le cas où $\Phi(p) = \Phi(q)$,
et B $\geq$ [max($e_i$)] $2^{g+1}$ sinon.
Dans notre exemple, on a E={$2^{16}+1$, 3, 17}. Ainsi, pour tous les i, on a $ei \leq 2^{16}+1$ et le test précédent peut donc être simplifié de la façon suivante consistant à vérifier si:

$(1-e_i.d) \; modulo \; n < B$, avec $B=2^{(\Phi(n)/2)+17}$ dans le cas où $\Phi(p) = \Phi(q)$,
et$(1-e_i.d) \; modulo \; n < B$, avec $B=2^{g+17}$ sinon.

Dans une deuxième variante du test, on peut encore simplifier le test précédent en vérifiant si les bits les plus significatifs, *par exemple* les 128 bits de poids fort, de $(1-e_i.d)$ modulo n sont nuls.
Enfin, pour cette première technique, une dernière simplification consiste à déterminer la relation prédéterminée pour le test sur les $e_i$ en démarrant avec la relation suivante:

$$\texttt{(-e.d) modulo n = k(p+q-1)-1}$$

à la place de la relation (6).

Ainsi, à partir de cette simplification, on obtient pour les relations de test (7, 7'), la simplification suivante:

$$\texttt{(-e}_\texttt{i}\texttt{.d) modulo n < e}_\texttt{i}\texttt{.2}^{\texttt{(}\Phi\texttt{(n)/2)+1}} \texttt{ si } \Phi\texttt{(p)= } \Phi\texttt{(q),}$$

et $(-e_i.d)$ modulo $n < e_i.2^{g+1}$ sinon.

Pour la première variante, on obtient le test simplifié suivant:

$(-e_i.d)$ modulo $n < B$, avec $B=2^{(\Phi(n)/2)+17}$ si $\Phi(p)=\Phi(q)$ et $B=2^{g+17}$ sinon.

Et, pour la deuxième variante du test, on obtient le test simplifié suivant consistant à vérifier si les premiers bits de poids fort de $(-e_i.d)$ modulo $n$ sont nuls.

Quelle que soit la variante mise en oeuvre, dans sa version simplifiée ou non, si le test n'est pas vérifié pour une valeur de $e_i$, on choisit une autre valeur pour $e_i$ dans l'ensemble E jusqu'à ce qu'une correspondance soit trouvée.

Si pour l'une ou l'autre des variantes qui concernent la première technique exposée ci-dessus, il n'existe pas parmi les $e_i$, une valeur telle que $e=e_i$, alors il reste à constater que les calculs de l'algorithme de cryptographie RSA en mode standard faisant intervenir e ne peuvent être effectués.

Par contre, lorsque la valeur de e a pu être retrouvée parmi les valeurs $e_i$ de l'ensemble de valeurs prédéterminées E, par l'une ou l'autre des variantes, on peut alors vérifier chaque opération privée (3) de l'algorithme de cryptographie (consistant en le déchiffrement d'un message ou la génération d'une signature) en s'assurant que la valeur x obtenue à partir d'une valeur y par application de l'opération privée vérifie la relation $x^e. = y$ modulo $n$. Si ce n'est pas le cas, *le message déchiffré ou* la signature n'est pas retourné pour éviter toute cryptanalyse.

Comme on l'a vu, une fois que l'on connaît e, le procédé selon l'invention peut également s'appliquer à une contre-mesure, notamment contre les attaques de type DPA *(et SPA),* telle qu'elle a été décrite plus haut dans la description. Une telle méthode ainsi consiste à: choisir un entier aléatoire r; calculer une valeur d* telle que $d^* = d+r.(e.d-1)$; mettre en oeuvre une opération privée de l'algorithme dans laquelle une valeur x est obtenue à partir d'une valeur y en appliquant la relation $x = y^{d^*}$ modulo $n$.

Enfin, la présente invention concerne une deuxième technique pour retrouver la valeur de l'exposant e parmi un ensemble E comprenant un ensemble de valeurs $e_i$ prédéterminées. Comme on le verra, cette technique s'applique aussi bien dans le cas du mode standard de l'algorithme RSA que dans le cas du mode CRT.

Cette technique consiste plus particulièrement à améliorer la méthode proposée dans D1. Ainsi, les étapes suivantes sont mises en oeuvre :

a) définir une valeur $\displaystyle \in = \prod_{e_i \in E} e_i$

*telle que $\in/e_i$ soit inférieur à $\Phi(n)$ pour tout $e_i$ appartenant à E, $\Phi$ étant la fonction indicatrice d'Euler;*
b) appliquer la valeur $\in$ dans un calcul prédéterminé;
c) pour chaque $e_i$, tester si le résultat dudit calcul prédéterminé est égal à une valeur $\in/e_i$:

- si c'est le cas, alors on attribue la valeur $e_i$ à e et on mémorise e en vue de son utilisation dans des calculs de l'algorithme de cryptographie.
- sinon, on constate que les calculs de l'algorithme de cryptographie utilisant la valeur e ne peuvent être effectués.

En mode standard, le calcul prédéterminé de l'étape b) consiste à calculer une valeur C telle que :

$C = \in.d$ modulo $\Phi(n)$, d étant la clé privée correspondante de l'algorithme RSA en mode standard telle que $e.d = 1$ modulo $\Phi(n)$.

Par exemple, soit l'ensemble E = {$e_0=3$, $e_1=17$, $e_2=2^{16}+1$}, alors $\in = e_0.e_1.e_2 = 3.17.(2^{16}+1)$.
Ainsi, avec $C = \in.d$ modulo $\Phi(n)$ :

Si $C = 17.(2^{16}+1) = \in/e_0$ alors $e = e_0 = 3$;

Si C = $3.(2^{16}+1) = \in/e_1$ alors e = $e_1$ = 17;
Si C = $3.17 = \in/e_2$ alors e = $e_2$ = $(2^{16}+1)$;

Par l'intermédiaire d'un seul calcul modulaire permettant d'obtenir la valeur de C, il est donc possible de retrouver la valeur de l'exposant e parmi un ensemble E, en fonction du résultat de ce calcul.

Selon une alternative, le calcul prédéterminé de l'étape b) consiste à calculer une valeur C telle que:

C = $\in.d$ modulo $\lambda(n)$, d étant la clé privée correspondante de l'algorithme RSA en mode standard mais calculée dans cette alternative modulo la fonction de Carmichael à la place de modulo la fonction indicatrice d'Euler, et donc telle que: e.d = 1 modulo $\lambda(n)$ et $\lambda$ étant la fonction de Carmichael.

Dans le cas où la valeur de e a pu effectivement être retrouvée et mémorisée, les calculs de l'algorithme de cryptographie en mode standard mettant en oeuvre la valeur de e consistent à parer les attaques par faute et à mettre en place une contre-mesure, notamment contre les attaques de type DPA *(et SPA),* et sont identiques à ceux décrits en référence à la première technique.

Dans une variante, lorsque l'algorithme RSA mis en oeuvre est en mode CRT, le calcul prédéterminé de l'étape b) consiste à calculer une valeur C telle que:

C = $\in.d_p$ modulo (p-1), $d_p$ étant la clé privée correspondante de l'algorithme RSA telle que e.$d_p$ = 1 modulo (p-1).

Ou bien encore, telle que :

C = $\in.d_q$ modulo (q-1), $d_q$ étant la clé privée correspondante de l'algorithme RSA telle que e.$d_q$ = 1 modulo (q-1),

ou bien les deux, et à prendre le e qui nous est donné par au moins un des deux tests.

Dans le cas où la valeur de e a pu effectivement être retrouvée et mémorisée, les calculs de l'algorithme de cryptographie en mode CRT mettant en oeuvre la valeur de e consistent à parer les attaques par faute.

On peut alors vérifier chaque opération privée en mode CRT de l'algorithme de cryptographie (consistant en le déchiffrement d'un message ou la génération d'une signature) en s'assurant que la valeur x obtenue à partir d'une valeur y par application de l'opération privée en mode CRT vérifie d'une part, la relation $x^e$ = y modulo p et, d'autre part, la relation $x^e$ = y modulo q.

**Revendications**

1. Procédé pour la mise en oeuvre sécurisée d'un algorithme de cryptographie à clé publique, ladite clé publique étant composée d'un nombre entier n, produit de deux grands nombres premiers p et q, et d'un exposant *public* e, algorithme comprenant également une clé privée, ledit procédé consistant à déterminer un ensemble E comprenant un nombre prédéterminé de nombres *premiers* $e_i$ susceptibles de correspondre à la valeur de l'exposant *public* e, **caractérisé en ce qu'**il comprend les étapes suivantes consistant à :

   a) calculer une valeur $\in = \prod_{e_i \in E} e_i$

   telle que $\in/e_i$ soit inférieur à $\Phi(n)$ pour tout $e_i$ appartenant à E, $\Phi$ étant la fonction indicatrice d'Euler;

   b) appliquer la valeur $\in$ dans un calcul prédéterminé faisant intervenir comme produit modulaire le seul produit modulaire de $\in$ par ladite clé privée de l'algorithme;

   c) pour chaque $e_i$, tester si le résultat dudit calcul prédéterminé est égal à une valeur $\in/e_i$:

      - si c'est le cas, alors attribuer la valeur $e_i$ à e et mémoriser e en vue de son utilisation dans des calculs dudit algorithme de cryptographie;
      - sinon, constater que les calculs dudit algorithme de cryptographie utilisant la valeur e ne peuvent être effectués.

2. Procédé selon la revendication 1, **caractérisé en ce que** l'algorithme de cryptographie est basé sur un algorithme de type RSA en mode standard.

3. Procédé selon la revendication 2, **caractérisé en ce que** le calcul prédéterminé de l'étape b) consiste à calculer une valeur C :

C = ∈.d modulo Φ(n), d étant la clé privée correspondante de l'algorithme RSA telle que e.d = 1 modulo Φ(n) et Φ étant la fonction indicatrice d'Euler.

4. Procédé selon la revendication 2, **caractérisé en ce que** le calcul prédéterminé de l'étape b) consiste à calculer une valeur C :

C = ∈.d modulo λ(n), d étant la clé privée correspondante de l'algorithme RSA telle que e.d = 1 modulo λ(n) et λ étant la fonction de Carmichael.

5. procédé selon la revendication 1, **caractérisé en ce que** l'algorithme de cryptographie est basé sur un algorithme de type RSA en mode CRT.

6. Procédé selon la revendication 5, **caractérisé en ce que** le calcul prédéterminé de l'étape b) consiste à calculer une valeur C :

C = ∈.$d_p$ modulo (p-1), $d_p$ étant la clé privée correspondante de l'algorithme RSA telle que e.$d_p$ = 1 modulo (p-1).

7. Procédé selon la revendication 5, **caractérisé en ce que** le calcul prédéterminé de l'étape b) consiste à calculer une valeur C :

C = ∈.$d_q$ modulo (q-1), dq étant la clé privée correspondante de l'algorithme RSA telle que e.$d_q$ = 1 modulo (q-1).

8. Procédé selon la revendication 5, **caractérisé en ce que** le calcul prédéterminé de l'étape b) consiste à calculer deux valeurs $C_1$ et $C_2$ telles que :

$C_1$ = ∈.$d_p$ modulo (p-1), $d_p$ étant la clé privée correspondante de l'algorithme RSA telle que e.$d_p$ = 1 modulo (p-1),
$C_2$ = ∈.$d_q$ modulo (q-1), dq étant la clé privée correspondante de l'algorithme RSA telle que e.$d_q$ = 1 modulo (q-1),

et **en ce que** l'étape de test c) consiste pour chaque $e_i$, à tester si $C_1$ et/ou $C_2$ est égal à la valeur ∈/$e_i$:

- si c'est le cas, alors attribuer la valeur $e_i$ à e et mémoriser e en vue de son utilisation dans des calculs dudit algorithme de cryptographie;
- sinon, constater que les calculs dudit algorithme de cryptographie utilisant la valeur e ne peuvent être effectués.

9. Procédé selon l'une quelconque des revendications 3 ou 4 et selon lequel une valeur $e_i$ a été attribuée à e, **caractérisé en ce que** les calcul utilisant la valeur e consistent à :

- choisir un entier aléatoire r;
- calculer une valeur d* telle que d* = d+r.(e.d-1);
- mettre en oeuvre une opération privée de l'algorithme dans laquelle une valeur x est obtenue à partir d'une valeur y en appliquant la relation x = $y^{d*}$ modulo n.

10. Procédé selon l'une quelconque des revendications 2 à 4 et selon lequel une valeur $e_i$ a été attribuée à e, **caractérisé en ce qu'**il consiste à obtenir, à l'issue d'une opération privée de l'algorithme, une valeur x à partir d'une valeur y et **en ce que** les calculs utilisant la valeur e consistent à vérifier si $x^e$ = y modulo n.

11. Procédé selon l'une quelconque des revendications 5 à 8, et selon lequel une valeur $e_i$ a été attribuée à e, **caractérisé en ce qu'**il consiste à obtenir, à l'issue d'une opération privée de l'algorithme, une valeur x à partir d'une valeur y et **en ce que** les calculs utilisant la valeur e consistent à vérifier d'une part, si $x^e$ = y modulo p et, d'autre part, si $x^e$ = y modulo q.

12. Procédé selon l'une quelconque des revendications précédentes, **caractérisé en ce que** l'ensemble E comprend au moins les valeurs $e_i$ suivantes 3, 17, $2^{16}$+1.

13. Composant électronique **caractérisé en ce qu'**il comprend des moyens pour la mise en oeuvre du procédé selon l'une quelconque des revendications précédentes.

**14.** Carte à puce comprenant un composant électronique selon la revendication 13.

**15.** Procédé pour la mise en oeuvre sécurisée d'un algorithme de cryptographie à clé publique, ladite clé publique étant composée d'un nombre entier n produit de deux grands nombres premiers p et q et d'un exposant public e, ledit procédé consistant à déterminer un ensemble E comprenant un nombre prédéterminé de nombres *premiers* $e_i$ susceptibles de correspondre à la valeur de l'exposant *public* e, **caractérisé en ce qu'**il consiste à réaliser les étapes suivantes consistant à:

a) choisir une valeur $e_i$ parmi les valeurs de l'ensemble E;

b) *si* $\delta(p)=\delta(q)$, avec $\delta(n)$, $\delta(p)$, $\delta(q)$, fonctions donnant le nombre de bits codant respectivement le nombre n, le nombre p et le nombre q, tester si la valeur $e_i$ choisie vérifie la relation : $(1-e_i.d)$ modulo $n < e_i.2^{(\delta(n)/2)+1}$ ou ladite relation simplifiée :

$$(-e_i.d) \text{ modulo } n < e_i.2^{(\delta(n)/2)+1}$$

avec $\delta(p)$, $\delta(q)$ et $\delta(n)$ les fonctions donnant le nombre de bits codant respectivement le nombre p, le nombre q et le nombre n;

c) si la relation de test appliquée à l'étape précédente est vérifiée, alors $e = e_i$, et mémoriser e en vue de son utilisation dans des calculs dudit algorithme de cryptographie,

- si ce n'est pas le cas, réitérer les étapes précédentes en choisissant une autre valeur de $e_i$ dans l'ensemble E jusqu'à ce qu'une valeur de $e_i$ puisse être attribuée à e et si aucune valeur de $e_i$ ne peut être attribuée à e alors constater que les calculs dudit algorithme de cryptographie utilisant la valeur de e ne peuvent pas être effectués.

**16.** Procédé pour la mise en oeuvre sécurisée d'un algorithme de cryptographie à clé publique selon la revendication 15, **caractérisé en ce qu'**il consiste à réaliser l'étape b de la manière suivante lorsque $\delta(p)\#\delta(q)$, cas où p et q sont désiquilibrés, étape consistant à tester si la valeur $e_i$ choisie vérifie la relation:

$$(1-e_i.d) \text{ modulo } n < e_i.2^{g+1}$$

ou ladite relation simplifiée :

$$(-e_i.d) \text{ modulo } n < e_i.2^{g+1}$$

avec $g=\max(\delta(p), \delta(q))$, si $\delta(p)$ et $\delta(q)$ sont connus ou, dans le cas contraire avec $g= \delta(n)/2+t$, où t désigne le facteur de déséquilibre ou une borne sur ce facteur.

**17.** Procédé selon la revendication 15 ou 16, **caractérisé en ce que** pour tous les i, $e_i \leq 2^{16}+1$ et **en ce que** l'étape b) est remplacée par une autre étape de test consistant à :

si $\delta(p)=\delta(q)$, tester si la valeur $e_i$ choisie vérifie la relation: $(1-e_i.d)$ modulo $n < 2^{(\delta(n)/2)+17}$ ou ladite relation simplifiée :

$$(-e_i.d) \text{ modulo } n < 2^{(\delta(n)/2)+17}$$

avec $\delta(p)$, $\delta(q)$ et $\delta(n)$ les fonctions donnant le nombre de bits codant respectivement le nombre p, le nombre q et le nombre n;

sinon, dans le cas où p et q sont déséquilibrés, tester si la valeur $e_i$ choisie vérifie la relation $(1-e_i.d)$ modulo $n < 2^{g+17}$ ou ladite relation simplifiée:

$$(-e_i.d) \text{ modulo } n < 2^{g+17}$$

avec g=max($\delta$(p), $\delta$(q)), si $\delta$(p) et $\delta$ (q) sont connus

ou, dans le cas contraire, avec g= $\delta$(n)/2+t, où t désigne le facteur de déséquilibre ou une borne sur ce facteur.

**18.** Procédé selon la revendication 15 ou 16, **caractérisé en ce que** l'étape b) est remplacée par une autre étape de test consistant à :

tester si la valeur $e_i$ choisie vérifie la relation selon laquelle:

les *premiers* bits de poids forts de (1-$e_i$.d) modulo n sont nuls ;

ou ladite relation simplifiée selon laquelle :

les premiers bits de poids forts de (-$e_i$.d) modulo n sont nuls.

**19.** Procédé selon la revendication 18, **caractérisé en ce que** le test est effectué sur les 128 premiers bits de poids forts.

**20.** Procédé selon l'une quelconque des revendications 15 à 19, **caractérisé en ce que** l'algorithme de cryptographie est basé sur un algorithme de type RSA en mode standard.

**21.** Procédé selon l'une quelconque des revendications 15 à 20, et selon lequel une valeur $e_i$ a été attribuée à e, **caractérisé en ce que** les calculs utilisant la valeur e consistent à :

- choisir un entier aléatoire r;
- calculer une valeur d* telle que d* = d+r.(e.d-1);
- mettre en oeuvre une opération privée de l'algorithme dans laquelle une valeur x est obtenue à partir d'une valeur y en appliquant la relation x = $y^{d^*}$ modulo n.

**22.** Procédé selon l'une quelconque des revendications 15 à 20 et selon lequel une valeur $e_i$ a été attribuée à e, **caractérisé en ce qu'**il consiste à obtenir, à l'issue d'une opération privée de l'algorithme, une valeur x à partir d'une valeur y et **en ce que** les calculs utilisant la valeur e consistent à vérifier si $x^e$ = y modulo n.

**23.** Procédé selon l'une quelconque des revendications 15 à 22, **caractérisé en ce que** l'ensemble E comprend au moins les valeurs $e_i$ suivantes 3, 17, $2^{16}$+1.

**24.** Procédé selon la revendication 23, **caractérisé en ce que** le choix préférentiel des valeurs $e_i$ parmi les valeurs de l'ensemble E est effectué selon l'ordre suivant : $2^{16}$+1, 3, 17.

**25.** Composant électronique **caractérisé en ce qu'**il comprend des moyens pour la mise en oeuvre du procédé selon l'une quelconque des revendications 15 à 24.

**26.** Carte à puce comprenant un composant électronique selon la revendication 25.

**Claims**

**1.** A method for securely implementing a public-key cryptography algorithm, said public key being composed of an integer n that is a product of two large prime numbers p and q, and of a public exponent e, said algorithm also including a private key, said method consisting in determining a set E comprising a predetermined number of prime numbers $e_i$ that can correspond to the value of the public exponent e, said method being **characterized in that** it comprises the following steps consisting in:

a) computing a value $\epsilon = \prod_{ei \in E} e_i$

such that $\epsilon/e_i$ is less than $\Phi(n)$ for any $e_i$ belonging to E, where $\Phi$ is the Euler totient function;

b) applying the value $\epsilon$ to a predetermined computation involving, as a modular product, only the modular product of $\epsilon$ multiplied by said private key of the algorithm;

c) for each $e_i$, testing whether the result of said predetermined computation is equal to a value $\epsilon/e_i$:

- if so, then attributing the value $e_i$ to e, and storing e for it to be used in computations of said cryptography algorithm;
- otherwise, observing that the computations of the cryptography algorithm using the value e cannot be performed.

2. A method according to claim 1, **characterized in that** the cryptography algorithm is based on an RSA-type algorithm in standard mode.

3. A method according to claim 2, **characterized in that** the predetermined computation of step b) consists in computing a value C:

C = $\epsilon$.d modulo $\Phi(n)$, where d is the corresponding private key of the RSA algorithm such that e.d = 1 modulo $\Phi(n)$ and $\Phi$ is the Euler totient function.

4. A method according to claim 2, **characterized in that** the predetermined computation of step b) consists in computing a value C:

C = $\epsilon$.d modulo $\lambda(n)$, where d is the corresponding private key of the RSA algorithm such that e.d = 1 modulo $\lambda(n)$, with $\lambda$ being the Carmichael function.

5. A method according to claim 1, **characterized in that** the cryptography algorithm is based on an RSA-type algorithm in CRT mode.

6. A method according to claim 5, **characterized in that** the predetermined computation of step b) consists in computing a value C:

C = $\epsilon$.$d_p$ modulo (p-1), where $d_p$ is the corresponding private key of the RSA algorithm such that e.$d_p$ = 1 modulo (p-1).

7. A method according to claim 5, **characterized in that** the predetermined computation of step b) consists in computing a value C:

C = $\epsilon$.$d_q$ modulo (q-1), where dq is the corresponding private key of the RSA algorithm such that e.$d_q$ = 1 modulo (q-1).

8. A method according to claim 5, **characterized in that** the predetermined computation of step b) consists in computing two values $C_1$ and $C_2$ such that:

$C_1$ = $\epsilon$.$d_p$ modulo (p-1), where $d_p$ is the corresponding private key of the RSA algorithm such that e.$d_p$ = 1 modulo (p-1);
$C_2$ = $\epsilon$.$d_q$ modulo (q-1), where dq is the corresponding private key of the RSA algorithm such that e.$d_q$ = 1 modulo (q-1);

and **in that** the test step c) consists, for each $e_i$, in testing whether $C_1$ and/or $C_2$ is equal to the value $\epsilon/e_i$:

- if so, then attributing the value $e_i$ to e and storing e for it to be used in computations of said cryptography algorithm;
- otherwise, observing that the computations of said cryptography algorithm using the value e cannot be performed.

9. A method according to claim 3 or claim 4 and in which a value $e_i$ has been attributed to e, said method being **characterized in that** the computations using the value e consist in:

choosing a random integer r;
computing a value d* such that d* = d+r.(e.d-1); and
implementing a private operation of the algorithm in which a value x is obtained from a value y by applying the relationship x = $y^{d*}$ modulo n.

10. A method according to any one of claims 2 to 4, and in which a value $e_i$ has been attributed to e, said method being **characterized in that** it consists, after a private operation of the algorithm, in obtaining a value x from a value y, and **in that** the computations using the value e consist in checking whether $x^e = y$ modulo n.

11. A method according to any one of claims 5 to 8, and in which a value $e_i$ has been attributed to e, **characterized in that** it consists, after a private operation of the algorithm, in obtaining a value x from a value y, and **in that** the computations using the value e consist in checking firstly whether $x^e = y$ modulo p and secondly whether $x^e = y$ modulo q.

12. A method according to any preceding claim, **characterized in that** the set E comprises at least the following $e_i$ values: 3, 17, $2^{16}+1$.

13. An electronic component **characterized in that** it comprises means for implementing the method according to any preceding claim.

14. A smart card including an electronic component according to claim 13.

15. A method for securely implementing a public-key cryptography algorithm, said public key being composed of an integer n that is a product of two large prime numbers p and q, and of a public exponent e, said method consisting in determining a set E comprising a predetermined number of prime numbers $e_i$ that can correspond to the value of the public exponent e, said method being **characterized in that** it comprises the following steps consisting in:

a) choosing a value $e_i$ from the values of the set E;
b) if $\delta(p) = \delta(q)$, where $\delta n$, $\delta(p)$, and $\delta(q)$ are functions giving the number of bits encoding respectively the number n, the number p, and the number q, testing whether the chosen $e_i$ value satisfies the relationship:

$$(1-e_i.d)\,modulo\ n\ <\ e_i.2^{(\delta(n)/2)+1}$$

or said relationship as simplified:

$$(-e_i.d)\,modulo\ n\ <\ e_i.2^{(\delta(n)/2)+1}$$

where $\delta(p)$, $\delta(q)$, and $\delta(n)$ are the functions giving the numbers of bits respectively encoding the number p, the number q, and the number n;
c) if the test relationship applied in the preceding step is satisfied and so e = $e_i$, storing e for it to be used in computations of said cryptography algorithm;

- otherwise, reiterating the preceding steps while choosing another value for $e_i$ from the set E until an $e_i$ value can be attributed to e and, if no $e_i$ value can be attributed to e, then observing that the computations of said cryptography algorithm using the value of e cannot be performed.

16. A method for securely implementing a public-key cryptography algorithm according to claim 15, **characterized in that** it consists in performing step b in the following manner when $\delta(p)\#\delta(q)$, i.e. when p and q are unbalanced, testing whether the chosen $e_i$ value satisfies the following relationship:

$$(1-e_i.d) \text{ modulo } n < e_i.2^{g+1}$$

or said relationship as simplified:

$$(-e_i.d) \text{ modulo } n < e_i.2^{g+1}$$

with g=max ($\delta$(p), $\delta$(q)), if $\delta$(p) and $\delta$(q) are known, or, otherwise, with g=$\delta$(n)/2+t, where t designates the imbalance factor or a limit on that factor

17. A method according to claim 15 or claim 16, **characterized in that**, for all values of i, $e_i \leq 2^{16}+1$, and **in that** the step b) is replaced by another test step consisting in:

if $\delta$(p)=$\delta$(q), testing whether the chosen $e_i$ value satisfies the relationship:

$$(1-e_i.d) \text{ modulo } n < e_i.2^{(\delta(n)/2)+17}$$

or said relationship as simplified:

$$(-e_i.d) \text{ modulo } n < e_i.2^{(\delta(n)/2)+17}$$

where $\delta$(p), $\delta$(q), and $\delta$(n) are the functions giving the numbers of bits respectively encoding the number p, the number q, and the number n;
otherwise, when p and q are unbalanced, testing whether the chosen $e_i$ value satisfies the following relationship:

$$(1-e_i.d) \text{ modulo } n < e_i.2^{g+17}$$

or said relationship as simplified:

$$(-e_i.d) \text{ modulo } n < e_i.2^{g+17}$$

with g=max ($\delta$(p),$\delta$(q)), if $\delta$(p) and $\delta$(q) are known, or, otherwise, with g=$\delta$(n)/2+t, where t designates the imbalance factor or a limit on that factor.

18. A method according to claim 15 or claim 16, **characterized in that** step b) is replaced with another test step consisting in:

testing whether the chosen $e_i$ value satisfies the relationship whereby:

the first most significant bits of (1-$e_i$.d) modulo n are zero;

or said relationship as simplified whereby:

the first most significant bits of (-$e_i$.d) modulo n are zero.

19. A method according to claim 18, **characterized in that** the test is performed on the first 128 most significant bits.

**20.** A method according to any one of claims 15 to 19, **characterized in that** the cryptography algorithm is based on an RSA-type algorithm in standard mode.

**21.** A method according to any one of claims 15 to 20, and in which an $e_i$ value has been attributed to e, said method being **characterized in that** the computations using the value e consist in:

- choosing a random integer r;
- computing a value d* such that d* = d+r.(e.d-1) ;
- implementing a private operation of the algorithm in which a value x is obtained from a value y by applying the relationship x = $y^{d*}$ modulo n.

**22.** A method according to any one of claims 15 to 20 and in which an $e_i$ value has been attributed to e, said method being **characterized in that** it consists, after a private operation of the algorithm, in obtaining a value x from a value y and **in that** the computations using the value e consist in checking whether $x^e$ = y modulo n.

**23.** A method according to any one of claims 15 to 22, **characterized in that** the set E comprises at least the following $e_i$ values: 3, 17, $2^{16}+1$.

**24.** A method according to claim 23, **characterized in that** the preferred choice of the values $e_i$ from the values of the set E is made in the following order: $2^{16}+1$, 3, 17.

**25.** An electronic component **characterized in that** it comprises means for implementing the method according to any one of claims 15 to 24.

**26.** A smart card including an electronic component according to claim 25.

**Patentansprüche**

**1.** Verfahren für die gesicherte Umsetzung eines Kryptographie-Algorithmus mit öffentlichem Schlüssel, wobei der genannte öffentliche Schlüssel aus einer ganzen Zahl n, dem Produkt aus zwei großen Primzahlen p und q und einem *öffentlichen* Exponenten *e* zusammengesetzt wird, wobei der Algorithmus ebenfalls einen privaten Schlüssel umfasst, wobei das genannte Verfahren in der Bestimmung einer Struktur E mit einer vorbestimmten Anzahl von Primzahlen $e_i$ besteht, die dem Wert des *öffentlichen* Exponenten e entsprechen können, **dadurch gekennzeichnet, dass** es die folgenden Stufen umfasst, die aus Folgendem bestehen:

a) Berechnung eines Wertes
$$\varepsilon = \prod_{e_i \in E} e_i$$

so dass $\varepsilon / e_i$ kleiner ist als $\varphi$ (n) für jedes zu E gehörende $e_i$, wobei $\varphi$ die Indikatorfunktion nach Euler ist;

b) Anwendung des Wertes $\varepsilon$ in einer vorbestimmten Berechnung, die als modulares Produkt das einzige modulare Produkt von $\varepsilon$ durch den genannten privaten Schlüssel des Algorithmus intervenieren lässt;

c) bei jedem $e_i$ testen, ob das Ergebnis der genannten vorbestimmten Berechnung gleich einem Wert $\varepsilon / e_i$ ist:

- wenn dies der Fall ist, dann den Wert $e_i$ e zuordnen und e zwecks seines Einsatzes in Berechnungen des genannten Kryptographie-Algorithmus speichern;
- andernfalls feststellen, dass die Berechnungen des genannten, den Wert e einsetzenden Kryptographie-Algorithmus nicht durchgeführt werden können.

**2.** Verfahren gemäß Anspruch 1, **dadurch gekennzeichnet, dass** der Kryptographie-Algorithmus auf einem Algorithmus vom Typ RSA im Standardmodus basiert.

**3.** Verfahren gemäß Anspruch 2, **dadurch gekennzeichnet, dass** die vorbestimmte Berechnung der Stufe b) in der Berechnung eines Wertes C besteht:

C = $\varepsilon$.d modulo $\varphi$(n), wobei d der dem Algorithmus RSA entsprechende private Schlüssel wie z. B. e.d = 1 modulo $\varphi$(n) ist und $\varphi$ die Indikatorfunktion nach Euler ist.

**4.** Verfahren gemäß Anspruch 2, **dadurch gekennzeichnet, dass** die vorbestimmte Berechnung der Stufe b) in der Berechnung eines Wertes C besteht:

$C = \varepsilon.d$ modulo $\lambda(n)$, wobei der dem Algorithmus RSA entsprechende private Schlüssel wie z. B. e.d = 1 modulo $\lambda(n)$ ist und $\lambda$ die Funktion nach Carmichael ist.

**5.** Verfahren gemäß Anspruch 1, **dadurch gekennzeichnet, dass** der Kryptographie-Algorithmus auf einem Algorithmus vom Typ RSA im Modus CRT ist.

**6.** Verfahren gemäß Anspruch 5, **dadurch gekennzeichnet, dass** die vorbestimmte Berechnung der Stufe b) in der Berechnung eines Wertes C besteht:

$C = \varepsilon.d_p$ modulo (p-1), wobei $d_p$ der dem Algorithmus RSA entsprechende private Schlüssel ist, wie z. B. e. $d_p$ = 1 modulo (p-1).

**7.** Verfahren gemäß Anspruch 5, **dadurch gekennzeichnet, dass** die vorbestimmte Berechnung der Stufe b) in der Berechnung eines Wertes C besteht:

$C = \varepsilon.d_p$ modulo (q-1), wobei $d_p$ der dem Algorithmus RSA entsprechende private Schlüssel ist, wie z. B. e.$d_p$ modulo (q-1).

**8.** Verfahren gemäß Anspruch 5, **dadurch gekennzeichnet, dass** die vorbestimmte Berechnung der Stufe c) in der Berechnung von zwei Werten $C_1$ und $C_2$ besteht, wie z. B.:

$C_1 = \varepsilon.d_p$ modulo (p-1), wobei $d_p$ der dem Algorithmus RSA entsprechende private Schlüssel ist, wie z. B. e.$d_p$ modulo (p-1),
$C_2 = \varepsilon.d_p$ modulo (q-1), wobei $d_p$ der dem Algorithmus RSA entsprechende private Schlüssel ist, wie z. B. e.$d_p$ modulo (q-1),

und dass die Teststufe c) bei jedem $e_i$ in dem Testen besteht, ob $C_1$ und / oder $C_2$ gleich dem Wert $\varepsilon / e_i$ entspricht:

- wenn dies der Fall ist, dann e dem Wert $e_i$ zuordnen und zwecks seines Einsatzes in Berechnungen des genannten Kryptographie-Algorithmus speichern;
- andernfalls feststellen, dass die Berechnungen des den Wert e einsetzenden genannten Kryptographie-Algorithmus nicht durchgeführt werden können.

**9.** Verfahren gemäß Anspruch 3 oder 4 und nach dem e ein Wert $e_i$ zugeordnet wurde, **dadurch gekennzeichnet, dass** die den Wert e einsetzenden Berechnungen aus Folgendem bestehen:

- Wahl einer zufälligen ganzen Zahl r;
- Berechnung eines Wertes d*, wie z. B. d* = d+r. (e.d-1);
- Umsetzung einer privaten Operation des Algorithmus, in der ein Wert x ausgehend von einem Wert y in Anwendung des Verhältnisses $x = y^{d*}$ modulo n erhalten wird.

**10.** Verfahren gemäß Anspruch 2 bis 4 und gemäß dem e ein Wert ei zugeordnet wurde, **dadurch gekennzeichnet, dass** es nach Abschluss einer privaten Operation des Algorithmus in der Einholung eines Wertes x ausgehend von einem Wert y besteht und dass die den Wert e einsetzenden Berechnungen in der Überprüfung bestehen, ob $x^e$ = y modulo n ist.

**11.** Verfahren gemäß Anspruch 5 bis 8 und nach dem e ein Wert $e_i$ zugeordnet wurde, **dadurch gekennzeichnet, dass** es nach Abschluss einer privaten Operation des Algorithmus in der Einholung eines Wertes x ausgehend von einem Wert y besteht und dass die den Wert e einsetzenden Berechnungen in der Überprüfung einerseits bestehen, ob $x^e$ = y modulo p und andererseits ob $x^e$ = y modulo q ist.

**12.** Verfahren gemäß einem der vorherigen Ansprüche, **dadurch gekennzeichnet, dass** die Struktur E wenigstens die folgenden Werte $e_i$ 3, 17, $2^{16}$ +1 umfasst.

**13.** Elektronische Komponente, **dadurch gekennzeichnet, dass** sie Mittel für die Umsetzung des Verfahrens gemäß einem der vorherigen Ansprüche umfasst.

14. Chipkarte mit einer elektronischen Komponente gemäß Anspruch 13.

15. Verfahren für die gesicherte Umsetzung eines Kryptographie-Algorithmus mit öffentlichem Schlüssel, wobei der genannte öffentliche Schlüssel aus einer ganzen Zahl n, dem Produkt aus zwei großen Primzahlen p und q und einem *öffentlichen* Exponenten e zusammengesetzt wird, wobei das genannte Verfahren in der Bestimmung einer Struktur E mit einer vorbestimmten Anzahl von Primzahlen $e_i$ besteht, die dem Wert des *öffentlichen* Exponenten e entsprechen können, **dadurch gekennzeichnet, dass** es die folgenden Stufen umfasst, die aus Folgendem bestehen:

a) Wahl eines Wertes $e_i$ aus den Werten der Struktur E;
b) wenn $\delta(p) = \delta(q)$, wobei $\delta(n)$, $\delta(p)$, $\delta(q)$ die Anzahl der jeweils die Zahl n, die Zahl p und die Zahl q kodierenden Bits vorgebenden Funktionen sind, dem Testen, ob der gewählte Wert $e_i$ das Verhältnis: $(1-e_i.d)$ modulo $n < e_i.2^{(\delta(n)/2)+1}$ überprüft
oder das vereinfachte Verhältnis

$$(-e_i.d) \text{ modulo } n < e_i.2^{(\delta(n)/2)+1}$$

wobei $\delta(p)$, $\delta(q)$ und $\delta(n)$ die die Anzahl von jeweils die Zahl p, die Zahl q und die Zahl n kodierenden Bits vorgebenden Funktionen sind;
c) wenn das auf die vorherige Stufe angewendete Testverhältnis angewendet wird, dann $e = e_i$ und e zwecks seines Einsatzes in Berechnungen des genannten Kryptographie-Algorithmus speichern.

- wenn dies nicht der Fall ist, die vorherigen Stufen durch die Wahl eines anderen Wertes von $e_i$ in der Struktur E wiederholen, bis e ein Wert $e_i$ zugeordnet werden kann, und wenn e kein anderer Wert $e_i$ zugeordnet werden kann, dann feststellen, dass die Berechnungen des genannten, den Wert von e einsetzenden Kryptographie-Algorithmus nicht durchgeführt werden kann.

16. Verfahren für die gesicherte Umsetzung eines Kryptographie-Algorithmus mit öffentlichem Schlüssel gemäß Anspruch 16, **dadurch gekennzeichnet, dass** es in der Realisierung der Stufe b auf folgende Weise besteht, wenn $\delta(p) \# \delta(q)$, ein Fall, in dem p und q im Ungleichgewicht sind, wobei die Stufe in dem Test besteht, ob der gewählte Wert $e_i$ das Verhältnis

$$(1 - e_i.d) \text{ modulo } n < e_i.2^{g+1}$$

oder das genannte vereinfachte Verhältnis:

$$(- e_i.d) \text{ modulo } n < e_i.2^{g+1}$$

wobei g = max $(\delta(p), \delta(q))$, wenn $\delta(p)$ und $\delta(q)$ bekannt sind oder wobei im umgekehrten Fall g = $\delta(n)/2+t$, wobei t den Ungleichheitsfaktor oder eine Grenze auf diesem Faktor bezeichnet,
überprüft.

17. Verfahren gemäß Anspruch 15 oder 16, **dadurch gekennzeichnet, dass** für alle i $e_i \leq 2^{16}$ und dass die Stufe b) durch eine andere Teststufe ersetzt wird, die aus Folgendem besteht:

wenn $\delta(p) = \delta(q)$, testen, ob der gewählte Wert $e_i$ das Verhältnis: $(1 - e_i.d)$ modulo $n < 2^{(\delta(n)/2+17)}$
oder das genannte vereinfachte Verhältnis:

$$(- e_i.d) \text{ modulo } n < 2^{(\delta(n)/2+17)}$$

überprüft,

wobei δ(p), δ (q) und δ(n) die die Anzahl von jeweils die Zahl p, die Zahl q und die Zahl n codierenden Bits vorgebenden Funktionen sind;

andernfalls, in dem Fall, in dem p und q im Ungleichgewicht sind, testen, ob der gewählte Wert $e_i$ das Verhältnis $(1-e_i.d)$ modulo n $< 2^{g+17}$

oder das genannte vereinfachte Verhältnis:

$$(-e_i.d) \ modulo \ n \ < \ 2^{g+17}$$

überprüft,

wobei g = max (δ (p), δ (q) wenn δ (p) und δ (q) bekannt sind oder, andernfalls, wobei g = δ (n) / 2+t, wobei t den Ungleichheitsfaktor oder eine Grenze auf diesem Faktor bezeichnet.

18. Verfahren gemäß Anspruch 15 oder 16, **dadurch gekennzeichnet, dass** die Stufe b) durch eine andere Teststufe ersetzt wird, die aus Folgendem besteht:

Testen, ob der gewählte Wert $e_i$ das Verhältnis überprüft, nach dem:

die *ersten* Bits mit hohem Gewicht von $(1-e_i.d)$ modulo n null sind;
oder das genannte vereinfachte Verhältnis, nach dem:

die ersten Bits mit hohem Gewicht von $(-e_i.d)$ modulo n null sind.

19. Verfahren gemäß Anspruch 18, **dadurch gekennzeichnet, dass** der Test auf den 128 ersten Bits mit hohem Gewicht durchgeführt wird.

20. Verfahren gemäß Anspruch 15 bis 19, **dadurch gekennzeichnet, dass** der Kryptographie-Algorithmus auf einem Algorithmus vom Typ RSA im Standardmodus basiert.

21. Verfahren gemäß Anspruch 15 bis 20 und gemäß dem e ein Wert $e_i$ zugeordnet wird, **dadurch gekennzeichnet, dass** die den Wert e einsetzenden Berechnungen aus Folgendem bestehen:

- Wahl einer zufälligen ganzen Zahl r;
- Berechnung eines Wertes d*, wie z. B. d* = d+r. (e.d-1);
- Umsetzung einer privaten Operation des Algorithmus, in dem ein Wert x ausgehend von einem Wert y in Anwendung des Verhältnisses $x = y^{d*}$ modulo n erhalten wird.

22. Verfahren gemäß Anspruch 15 bis 20 und gemäß dem e ein Wert $e_i$ zugeordnet wird, **dadurch gekennzeichnet, dass** es nach Abschluss einer privaten Operation des Algorithmus in dem Erhalt eines Wertes x ausgehend von einem Wert y besteht und dass die den Wert e einsetzenden Berechnungen in der Überprüfung bestehen, ob $x^e$ = y modulo n ist.

23. Verfahren gemäß Anspruch 15 bis 22, **dadurch gekennzeichnet, dass** die Struktur E wenigstens die folgenden Werte $e_i$ 3, 17, $2^{16+1}$ umfasst.

24. Verfahren gemäß Anspruch 23, **dadurch gekennzeichnet, dass** die bevorzugte Wahl der Werte $e_i$ aus den Werten der Struktur E gemäß der folgenden Reihenfolge erfolgt: $2^{16}$ + 1, 3, 17.

25. Elektronische Komponente, **dadurch gekennzeichnet**, das sie Mittel für die Umsetzung des Verfahrens gemäß Anspruch 15 bis 24 umfasst.

26. Chipkarte mit einer elektronischen Komponente gemäß Anspruch 25.